(19) Europäisches Patentamt / European Patent Office / Office européen des brevets

(11) **EP 2 819 329 B1**

(12) **EUROPEAN PATENT SPECIFICATION**

(45) Date of publication and mention
of the grant of the patent:
**15.11.2017 Bulletin 2017/46**

(51) Int Cl.:
**H04N 17/00** (2006.01)

(21) Application number: **12874996.7**

(22) Date of filing: **26.09.2012**

(86) International application number:
**PCT/CN2012/081967**

(87) International publication number:
**WO 2013/159487 (31.10.2013 Gazette 2013/44)**

(54) **METHOD AND DEVICE FOR EVALUATING MULTIMEDIA QUALITY**

VERFAHREN UND VORRICHTUNG ZUM EVALUIEREN EINER MULTIMEDIA-QUALITÄT

PROCÉDÉ ET DISPOSITIF PERMETTANT D'ÉVALUER UNE QUALITÉ MULTIMÉDIA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2012 CN 201210120184**

(43) Date of publication of application:
**31.12.2014 Bulletin 2015/01**

(73) Proprietor: **Huawei Technologies Co., Ltd.
Longgang District
Shenzhen, Guangdong 518129 (CN)**

(72) Inventors:
• **SUN, Lina
Goadong 518129 (CN)**
• **GAO, Shan
Goadong 518129 (CN)**

(74) Representative: **Kreuz, Georg Maria et al
Huawei Technologies Duesseldorf GmbH
Riesstrasse 8
80992 München (DE)**

(56) References cited:
**EP-A1- 2 106 153        EP-A1- 2 439 953
CN-A- 1 938 972        CN-A- 101 068 166
CN-A- 101 540 896      US-A1- 2009 153 668**

## Description

### TECHNICAL FIELD

The present invention relates to the multimedia field, and in particular, to a method and an apparatus for evaluating multimedia quality.

### BACKGROUND

With development of network technologies and coming of a new age of multimedia, a video on demand, a web television, videotelephony, and the like have become main services of a broadband network, and these services will also become main services of a 3rd Generation (3G) wireless network. Various multimedia processing and communications technologies emerge one after another. For a multimedia service, an amount of data is large, a requirement for real-time performance is high, and user sensitivity is strong; therefore, multimedia quality evaluation has a very important significance for a manufacturer and an operator of multimedia communications equipment. If an equipment manufacturer can provide a convincible multimedia quality evaluation result for a system, this has a very great effect of promoting sales of a product of the equipment manufacturer; and for the operator, multimedia quality evaluation data may be used for service promotion and publicity of the operator. In addition, if an automatic and real-time multimedia quality evaluation method can be developed, both the equipment manufacturer and the operator can perform real-time monitoring on a multimedia device based on this implementation, so as to help locate a problem and diagnose a fault, to ensure a user's requirement of experiencing the multimedia service.

Multimedia quality is a measurement for measuring distortion of digital multimedia relative to an original signal. Key factors that affect multimedia communication quality are video quality, audio quality, a video distortion level, and an audio distortion level. A video signal and an audio signal in a multimedia sequence need to go through phases such as sampling, quantification, compression coding, network transmission, decoding, and restoration of an analog signal, where an error and information distortion are possibly introduced in each phase, resulting in low user satisfaction. Damage and distortion of an audio or a video both cause declined multimedia experience; therefore, how to obtain the multimedia quality according to a combination of the video quality and the audio quality becomes a key problem.

A general multimedia quality evaluation method first separately evaluates audio sequence quality and video sequence quality in the multimedia sequence on a condition that there is network damage, and then combines the audio sequence quality and the video sequence quality by using a specific polynomial formula, to obtain the multimedia quality.

When there is no packet loss on a network, both the audio and the video have relatively stable reference quality, and a feeling of a person for the multimedia quality is reference quality obtained by directly combining the audio and the video. However, when there is a packet loss, the person feels that the multimedia quality that is originally stable encounters a sudden quality deterioration, that is, the distortion of the multimedia sequence caused by the packet loss, but it is not the case that the video and the audio are, in a case of the packet loss, separately evaluated before being combined. The existing multimedia quality evaluation method cannot directly reflect impact of the packet loss on the multimedia sequence and the distortion of the multimedia sequence, and does not accord with a subjective feeling of a person.

EP 2 106 153 A1 discloses a method and a measurement system for estimating a quality of an audio-video signal. In particular, an audio-visual quality is computed, which provides a measure for the perceived quality of an audio-video signal. The apparatus and the method according to the invention preferably work without reference to the audio-video signal before transmission. Possible applications are network planning and service monitoring.

US 2009/0153668 A1 describes a video transmission system in which video quality is assessed in real-time with reduced computational load upon the client. The server performs first picture quality assessment and sends the assessment result to the client, and the client performs second picture quality assessment only when a transmission error occurs.

EP 2 439 953 A1 discloses a method and an apparatus for obtaining a video quality parameter and an electronic device. The method includes: dividing a target video segment into at least one video subsegment, where duration of every video subsegment is at least time perceivable by human eyes; obtaining a video quality parameter of the video subsegment; and processing the video quality parameter of the video subsegment, and obtaining a video quality parameter of the target video segment. Through the embodiments of the present invention, accuracy of video quality evaluation may be improved.

### SUMMARY

The present invention provides a method and an apparatus for evaluating multimedia quality, which accord with a subjective feeling of a person, and can accurately and effectively evaluate the multimedia quality.

According to one aspect, the present invention provides a method for evaluating multimedia quality according to claim 1.

According to still another aspect, the present invention provides an apparatus for evaluating multimedia quality according to claim 2.

Based on the foregoing technical solutions, the method and the apparatus for evaluating multimedia quality according to the present invention, by determining the multimedia quality of the multimedia sequence according to the reference quality of the multimedia sequence and the distortion value of the multimedia sequence, can directly reflect the distortion of the multimedia sequence, accord with a subjective feeling of a person, and therefore can accurately and effectively evaluate the multimedia quality.

**BRIEF DESCRIPTION OF DRAWINGS**

To describe the technical solutions of the present invention more clearly, drawings describing embodiments of the present invention are attached. Apparently, the accompanying drawings in the following description show merely some embodiments of the present invention.

FIG. 1 is a schematic flowchart of a method for evaluating multimedia quality according to an embodiment of the present invention;

FIG. 2 is a schematic flowchart of a method for determining a distortion value of a multimedia sequence according to an embodiment of the present invention;

FIG. 3 is another schematic flowchart of a method for evaluating multimedia quality according to an embodiment of the present invention;

FIG. 4 is still another schematic flowchart of a method for evaluating multimedia quality according to an embodiment of the present invention;

FIG. 5 is a schematic flowchart of a method for evaluating multimedia quality according to another embodiment of the present invention;

FIG. 6 is a schematic block diagram of an apparatus for evaluating multimedia quality according to an embodiment of the present invention;

FIG. 7 is a schematic block diagram of a distortion value determining module according to an embodiment of the present invention;

FIG. 8 is another schematic block diagram of an apparatus for evaluating multimedia quality according to an embodiment of the present invention; and

FIG. 9 is a schematic block diagram of an apparatus for evaluating multimedia quality according to another embodiment of the present invention.

**DESCRIPTION OF EMBODIMENTS**

The following clearly and completely describes the technical solutions of the present invention with reference to the accompanying drawings of embodiments of the present invention. Apparently, the described embodiments are a part rather than all of the embodiments of the present invention.

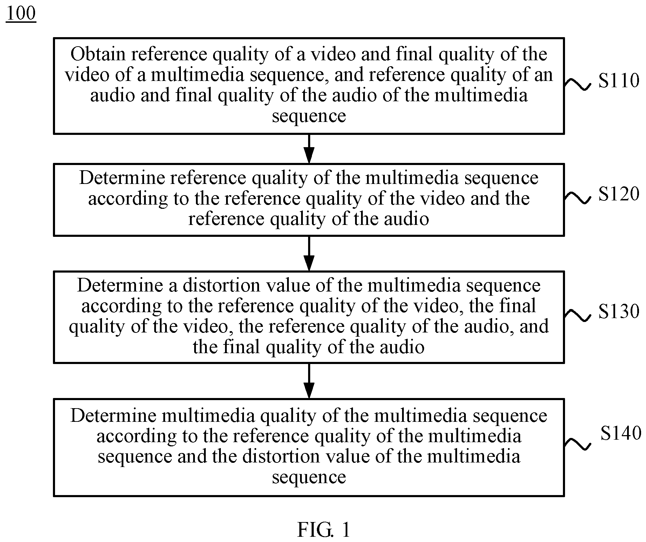

FIG. 1 is a schematic flowchart of a method 100 for evaluating multimedia quality according to an embodiment of the present invention. As shown in FIG. 1, the method 100 includes:

S110: Obtain reference quality of a video and final quality of the video of a multimedia sequence, and reference quality of an audio and final quality of the audio of the multimedia sequence.

S120: Determine reference quality of the multimedia sequence according to the reference quality of the video and the reference quality of the audio.

S130: Determine a distortion value of the multimedia sequence according to the reference quality of the video, the final quality of the video, the reference quality of the audio, and the final quality of the audio.

S140: Determine multimedia quality of the multimedia sequence according to the reference quality of the multimedia sequence and the distortion value of the multimedia sequence.

A feeling of a person for multimedia quality is that distortion is superposed on stable multimedia reference quality. What the multimedia reference quality describes is multimedia compression quality that is caused by coding compression of the video or the audio in multimedia. Due to a factor such as a packet loss or multimedia freezing, the person feels the distortion of the multimedia sequence. The distortion is a relative deterioration level that is relative to the reference quality, that is, the multimedia quality deteriorates from relatively stable reference quality. In this embodiment of the present invention, after the reference quality of the video and the final quality of the video of the multimedia sequence, and the reference quality of the audio and the final quality of the audio of the multimedia sequence are obtained, the reference quality of the multimedia sequence is determined according to the reference quality of the video and the reference quality of the audio, the distortion value of the multimedia sequence is determined according to the reference quality of the video, the final quality of the video, the reference quality of the audio, and the final quality of the audio, and finally the multimedia quality of the multimedia sequence is determined according to the reference quality of the multimedia sequence and the distortion value of the multimedia sequence. In this way, the distortion of the multimedia sequence is comprehensively understood, but is not a combination after the video and the audio are separately understood.

Therefore, the method for evaluating multimedia quality according to this embodiment of the present invention, by determining the multimedia quality of the multimedia sequence according to the reference quality of the multimedia sequence and the distortion value of the multimedia sequence, can directly reflect the distortion of the multimedia sequence, accords with a subjective feeling of a person, and therefore can accurately and effectively evaluate the multimedia quality.

In S110, the reference quality of the video, the final quality of the video, the reference quality of the audio, and the final quality of the audio of the multimedia sequence are obtained. The reference quality of the video is video compression quality that is caused due to the coding compression of the video, and specifically may be obtained through calculation according to coding bit rates of videos with different coding types and resolutions; and the reference quality of the audio is audio compression quality that is caused due to the coding compression of the audio, and specifically may be obtained through calculation according to coding bit rates of audios with different coding types, sampling frequencies, the number of channels, and so on. The final quality of the video and the final quality of the audio are the obtained final experience quality of the video and the audio of the multimedia sequence, where network damage (for example, the packet loss, a jitter, and so on) separately occurs in the video and the audio, and specifically may be obtained through calculation by performing an audio and video analysis on the multimedia sequence.

In S120, the reference quality of the multimedia sequence is determined according to the reference quality of the video and the reference quality of the audio. This embodiment of the present invention does not limit a specific manner in which the reference quality of the multimedia sequence is determined. For example, reference quality $Q_{av}'$ of the multimedia sequence may be determined by the following equation (1):

$$Q_{av}' = a_1 \cdot Q_{v\_coding} + a_2 \cdot Q_{a\_coding} + a_3 \cdot Q_{v\_coding} \cdot Q_{a\_coding} + a_4 \qquad (1)$$

where, $Q_{v\_coding}$ and $Q_{a\_coding}$ are respectively the reference quality of the video and the reference quality of the audio, $a_1$, $a_2$, $a_3$ and $a_4$ are parameters related to a space resolution and a display mode of the video, and their values are obtained by using data training, and are basically all decimal fractions between 0 and 1, for example, when the resolution is (128×96), $a_1$ =0.207962, $a_2$ =0.124365, $a_3$ =0.179018, $a_4$ = 0.5456.

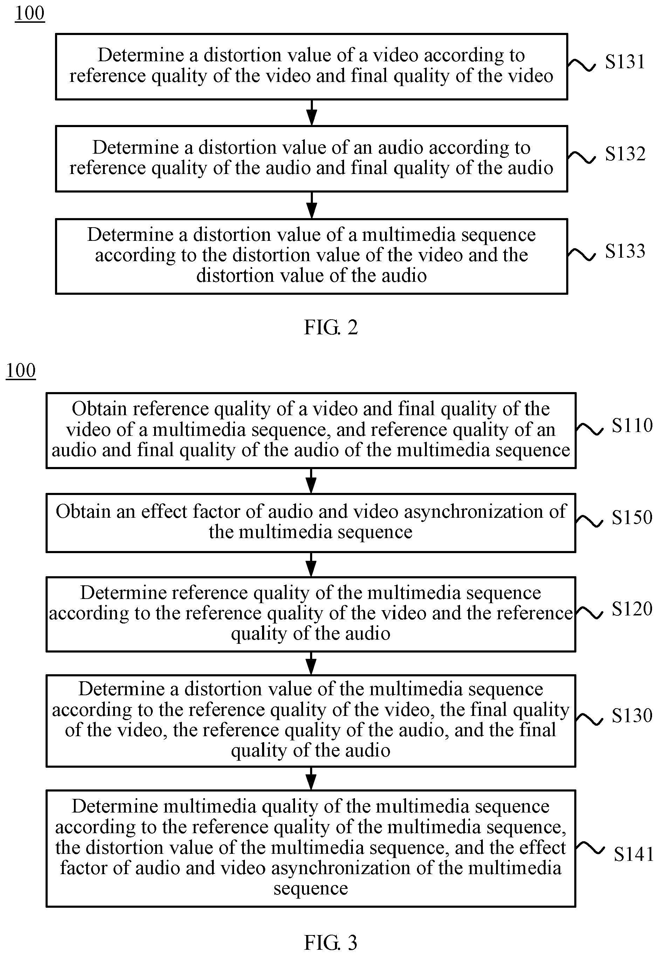

In S130, the distortion value of the multimedia sequence is determined according to the reference quality of the video, the final quality of the video, the reference quality of the audio, and the final quality of the audio. As shown in FIG. 2, S130 also includes:

  S 131: Determine a distortion value of the video according to the reference quality of the video and the final quality of the video.
  S132: Determine a distortion value of the audio according to the reference quality of the audio and the final quality of the audio.
  S133: Determine the distortion value of the multimedia sequence according to the distortion value of the video and the distortion value of the audio.

The distortion value of the video may be obtained by subtracting the final quality of the video from the reference quality of the video, and the distortion value of the audio may be obtained by subtracting the final quality of the audio from the reference quality of the audio.

In S133, the distortion value of the multimedia sequence is determined according to the distortion value of the video and the distortion value of the audio. Specifically, the distortion value of the multimedia sequence may be obtained in the following manner.

A distortion factor of the video is determined according to the reference quality of the video and the distortion value of the video. A distortion factor $d_v$ of the video is a proportion of a distortion value $D_v$ of the video to reference quality $Q_{v\_coding}$ of the video, and optionally may be determined by the following equation (2):

$$d_v = \frac{D_v}{Q_{v\_coding}} \qquad (2)$$

It should be understood that, the distortion value $D_v$ of the video is obtained by subtracting the final quality of the video from the reference quality of the video; therefore, optionally, the distortion factor $d_v$ of the video may also be determined by the following equation (3):

$$d_v = \frac{Q_{v\_coding} - Q_v}{Q_{v\_coding}} \tag{3}$$

A distortion factor of the audio is determined according to the reference quality of the audio and the distortion value of the audio. A distortion factor $d_a$ of the audio is a proportion of a distortion value $D_a$ of the audio to reference quality $Q_{a\_coding}$ of the audio, and optionally may be determined by the following equation (4):

$$d_a = \frac{D_a}{Q_{a\_coding}} \tag{4}$$

Similarly, the distortion value $D_a$ of the audio is obtained by subtracting the final quality of the audio from the reference quality of the audio; therefore, optionally, the distortion factor $d_a$ of the audio may also be determined by the following equation (5):

$$d_a = \frac{Q_{a\_coding} - Q_a}{Q_{a\_coding}} \tag{5}$$

The distortion factor of the multimedia sequence is determined according to the distortion factor of the video and the distortion factor of the audio. A distortion factor $d_{av}$ of the multimedia sequence is determined by the distortion factor $d_v$ of the video and the distortion factor $d_a$ of the audio. An increase of the distortion factor $d_v$ of the video or the distortion factor $d_a$ of the audio increases the distortion factor $d_{av}$ of the multimedia sequence, and their relationship may be linear, may also be non-linear, and may also be a combination of linear and non-linear. This embodiment of the present invention does not limit a specific manner in which the distortion factor $d_{av}$ of the multimedia sequence is calculated according to the distortion factor $d_v$ of the video and the distortion factor $d_a$ of the audio, for example, $d_{av}$ may be determined by the following equation (6) or (7):

$$d_{av} = \frac{a_5 \cdot d_v + a_6 \cdot d_a}{1 + a_5 \cdot d_v + a_6 \cdot d_a} \tag{6}$$

$$d_{av} = a_5 + a_6 \cdot d_v + a_7 \cdot d_a \tag{7}$$

where, $a_5$, $a_6$, $a_7$ are constants, and their values are related to a coding type and a video resolution and meet a condition that $d_{av}$ increases when $d_v$ or $d_a$ increases; and specific numerical values may be obtained by using an experiment.

The distortion value of the multimedia sequence is determined according to the reference quality of the multimedia sequence and the distortion factor of the multimedia sequence. For example, a distortion value $D_{av}$ of the multimedia sequence may be determined by the following equation (8):

$$D_{av} = \left( Q_{av}{}' - Q_{min} \right) \cdot d_{av} \tag{8}$$

where, $Q_{min}$ is a constant, and indicates minimum multimedia quality, for example, when a rating is a 5-point system, the minimum quality is 1.

In S140, the multimedia quality of the multimedia sequence is determined according to the reference quality of the multimedia sequence and the distortion value of the multimedia sequence. After the reference quality $Q_{av}{}'$ of the multimedia sequence and the distortion value $D_{av}$ of the multimedia sequence are determined, multimedia quality $Q_{av}$ of the multimedia sequence is obtained according to $Q_{av}{}'$ and $D_{av}$, and their relationship may be indicated by the following equation (9):

$$Q_{av} = f\left(Q_{av}', D_{av}\right) \tag{9}$$

For example, the relationship may be expressed as the following equation (10):

$$Q_{av} = Q_{av}' - D_{av} \tag{10}$$

The formulas (9) and (10) indicate that the multimedia quality of the multimedia sequence is a result obtained after the distortion is superposed on the reference quality of the multimedia sequence, and the feeling of the person for the multimedia quality is exactly that the distortion is superposed on stable multimedia reference quality. Therefore, the method for evaluating multimedia quality according to this embodiment of the present invention accords with a cognition characteristic of the person.

In this way, the method for evaluating multimedia quality according to this embodiment of the present invention, by determining the multimedia quality of the multimedia sequence according to the reference quality of the multimedia sequence and the distortion value of the multimedia sequence, can directly reflect the distortion of the multimedia sequence, accords with the subjective feeling of the person, and therefore can accurately and effectively evaluate the multimedia quality.

Optionally, the multimedia quality of the multimedia sequence may be obtained after the equations (1), (3), (5), (6), and (8) are substituted into the equation (10). In this case, the multimedia quality $Q_{av}$ of the multimedia sequence is a function of the reference quality $Q_{v\_coding}$ of the video, the reference quality $Q_{a\_coding}$ of the audio, final quality $Q_v$ of the video, and final quality $Q_a$ of the audio.

Optionally, for the equation (1), the following equation (11) may be obtained by substituting parameters of the equation (1) and performing arrangement:

$$\begin{aligned}
Q_{av}' &= a_1 \cdot \left(Q_v + D_v\right) + a_2 \cdot \left(Q_a + D_a\right) + a_3 \cdot \left(Q_v + D_v\right) \cdot \left(Q_a + D_a\right) + a_4 \\
&= a_1 \cdot Q_v + a_1 \cdot D_v + a_2 \cdot Q_a + a_2 \cdot D_a + a_3 \cdot \left(Q_v \cdot Q_a + Q_v \cdot D_a + D_v \cdot Q_a + D_v \cdot D_a\right) + a_4 \\
&= \left(a_1 \cdot Q_v + a_2 \cdot Q_a + a_3 \cdot Q_v \cdot Q_a + a_4\right) + \left(a_1 \cdot D_v + a_2 \cdot Q_a + a_3 \cdot \left(Q_v \cdot D_a + D_v \cdot Q_a + D_v \cdot D_a\right)\right) \\
&= Q'' + f_1\left(Q_v, Q_a, D_v, D_a\right) \\
&\qquad (11)
\end{aligned}$$

In the equation (11), $Q''$ indicates $a_1 \cdot Q_v + a_2 \cdot Q_a + a_3 \cdot Q_v \cdot Q_a + a_4$, that is, one quality score is obtained according to the final quality of the video and the final quality of the audio. $a_1 \cdot D_v + a_2 \cdot Q_a + a_3 \cdot (Q_v \cdot D_a + D_v \cdot Q_a + D_v \cdot D_a)$ is expressed in a form of a function $f_1(Q_v, Q_a, D_v, D_a)$, and then the equation (10) for calculating the multimedia quality may be expressed as the following equation (12):

$$Q_{av} = \left(Q'' + f_1\left(Q_v, Q_a, D_v, D_a\right)\right) - \left(Q'' + f_1\left(Q_v, Q_a, D_v, D_a\right) - Q_{\min}\right) \cdot d_{av} \tag{12}$$

where, a multimedia distortion factor $d_{av}$ may be expressed in multiple forms of functions, and therefore may be expressed in a form of $f_2(Q_v, Q_a, D_v, D_a)$, and then the equation (12) may be expanded as the following equation (13):

$$\begin{aligned}
Q_{av} &= Q'' \cdot \left(1 - f_2\left(Q_v, Q_a, D_v, D_a\right)\right) + \\
&\qquad f_1\left(Q_v, Q_a, D_v, D_a\right) \cdot \left(1 - f_2\left(Q_v, Q_a, D_v, D_a\right)\right) + Q_{\min} \cdot f_2\left(Q_v, Q_a, D_v, D_a\right) \\
&= Q'' \cdot f_3\left(Q_v, Q_a, D_v, D_a\right) + f_4\left(Q_{\min}, Q_v, Q_a, D_v, D_a\right)
\end{aligned} \tag{13}$$

$1 - f_2(Q_v, Q_a, D_v, D_a)$ is expressed by using a function $f_3(Q_v, Q_a, D_v, D_a)$, $f_1(Q_v, Q_a, D_v, D_a) \cdot (1 - f_2(Q_v, Q_a, D_v, D_a)) + Q_{\min} \cdot f_2(Q_v, Q_a, D_v, D_a)$ is expressed by using a function $f_4(Q_{\min}, Q_v, Q_a, D_v, D_a)$, and then a calculation method for multimedia quality may be expanded as another expression form described above, that is, the multimedia quality $Q_{av}$ is a function

of the final quality $Q_v$ of the video, the final quality $Q_a$ of the audio, the distortion value $D_v$ of the video, and the distortion value $D_a$ of the audio.

The method for evaluating multimedia quality according to this embodiment of the present invention, by determining the multimedia quality of the multimedia sequence according to the reference quality and the distortion value of the multimedia sequence, can directly reflect the distortion of the multimedia sequence, accords with the subjective feeling of the person, and therefore can accurately and effectively evaluate the multimedia quality.

When the audio and the video are asynchronous, the multimedia quality of the multimedia sequence possibly deteriorates. In this scenario, a problem that the audio and the video are asynchronous needs to be considered. Therefore, as shown in FIG. 3, the method 100 for evaluating multimedia quality according to this embodiment of the present invention further includes:

S150: Obtain an effect factor of audio and video asynchronization of the multimedia sequence.

S 140 further includes:

S141: Determine the multimedia quality of the multimedia sequence according to the reference quality of the multimedia sequence, the distortion value of the multimedia sequence, and the effect factor of audio and video asynchronization of the multimedia sequence.

In S150, the effect factor of audio and video asynchronization of the multimedia sequence is obtained. The effect factor of audio and video asynchronization of the multimedia sequence is a function of a time difference $\Delta T_{syn}$ of audio and video asynchronization, and reflects impact of audio and video asynchronization on the multimedia quality.

In S141, the multimedia quality of the multimedia sequence is determined according to the reference quality of the multimedia sequence, the distortion value of the multimedia sequence, and the effect factor of audio and video asynchronization of the multimedia sequence. Their relationship may be expressed as the following equation (14):

$$Q_{av} = f\left(Q_{av}', D_{av}, f_5\left(\Delta T_{syn}\right)\right) \qquad (14)$$

where, $f_5(\Delta T_{syn})$ is the effect factor of audio and video asynchronization of the multimedia sequence.

For example, optionally, the multimedia quality $Q_{av}$ of the multimedia sequence may be determined by the following equation (15):

$$Q_{av} = Q_{av}' - D_{av} \cdot f_5\left(\Delta T_{syn}\right) \qquad (15)$$

where, $f_5(\Delta T_{syn})$ is greater than 1, and a larger $|\Delta T_{syn}|$ indicates a larger $f_5(\Delta T_{syn})$, which makes $Q_{av}$ smaller; and $f_5(\Delta T_{syn})$ is not limited in form, may be linear, may also be non-linear, and may also be a combination of a linear formula and a non-linear formula; for example, its specific form may be expressed as the following equation (16):

$$f_5\left(\Delta T_{syn}\right) = b_1 \cdot \left|\Delta T_{syn}\right| + c_1 \left(b_1 > 0\right) \quad \text{or}$$

$$f_5\left(\Delta T_{syn}\right) = b_1 \cdot \left(\left|\Delta T_{syn}\right|\right)^2 + c_1 \cdot \left|\Delta T_{syn}\right| + d_1 \left(b_1 > 0, c_1 \geq 0\right) \quad \text{or} \qquad (16)$$

$$f_5\left(\Delta T_{syn}\right) = b_1^{\left|\Delta T_{syn}\right|} \left(b_1 > 1\right)$$

where, $b_1, c_1, d_1$ are constants.

Optionally, the multimedia quality $Q_{av}$ of the multimedia sequence may also be determined by the following equation (17):

$$Q_{av} = \left(Q_{av}' - D_{av}\right) \cdot f_6\left(\Delta T_{syn}\right) \qquad (17)$$

where, $f_6(\Delta T_{syn})$ is the effect factor of audio and video asynchronization of the multimedia sequence, its value is less than 1 and greater than 0, and a larger $|\Delta T_{syn}|$ indicates a smaller $f_6(\Delta T_{syn})$, which makes $Q_{av}$ smaller; and $f_6(\Delta T_{syn})$ is not limited in form, may be linear, may also be non-linear, and may also be a combination of a linear formula and a non-linear formula; for example, its specific form may be expressed as the following equation (18):

$$f_6\left(\Delta T_{syn}\right) = b_2 \cdot \left|\Delta T_{syn}\right| + c_2 \left(b_2 < 0\right) \quad \text{or}$$

$$f_6\left(\Delta T_{syn}\right) = b_2 \cdot \left(\left|\Delta T_{syn}\right|\right)^2 + c_2 \cdot \left|\Delta T_{syn}\right| + d_2 \left(b_2 < 0, c_2 \leq 0\right) \quad \text{or} \qquad (18)$$

$$f_6\left(\Delta T_{syn}\right) = b_2^{\left|\Delta T_{syn}\right|} \left(0 < b_2 < 1\right)$$

where, $b_2, c_2, d_2$ are constants.

The formulas (14), (15), and (17) indicate that the multimedia quality of the multimedia sequence is a result obtained after the distortion and the impact of audio and video asynchronization are superposed on the reference quality of the multimedia sequence, and accords with the cognition characteristic of the person.

Therefore, the method for evaluating multimedia quality according to this embodiment of the present invention, by determining the multimedia quality according to the reference quality of the multimedia sequence, the distortion value of the multimedia sequence, and the effect factor of audio and video asynchronization of the multimedia sequence, accords with the subjective feeling of the person, and therefore can accurately and effectively evaluate the multimedia quality.

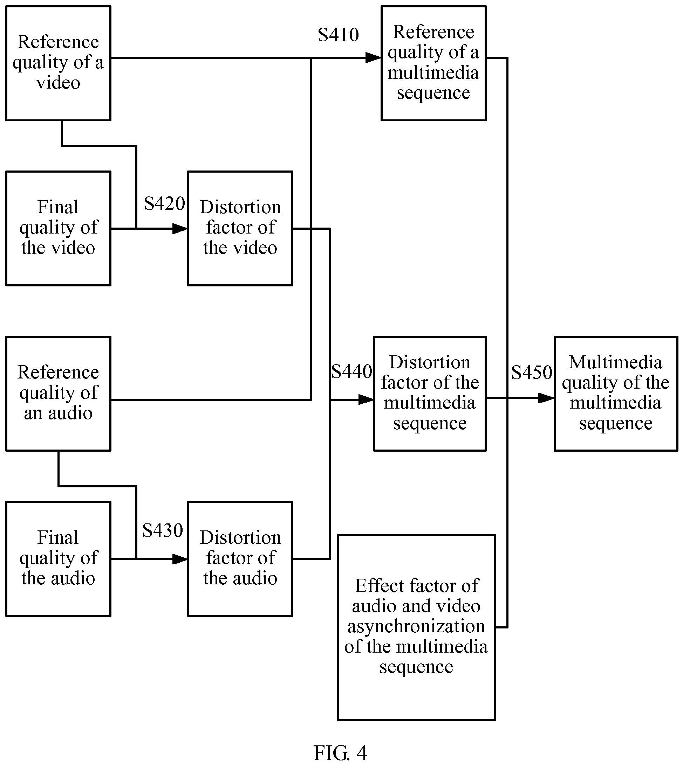

With reference to FIG. 4, the following describes in detail the method for evaluating multimedia quality according to this embodiment of the present invention.

S410: Calculate reference quality of a multimedia sequence according to reference quality of a video and reference quality of an audio. For example, the foregoing equation (1) may be used.

S420: Calculate a distortion factor of the video according to the reference quality of the video and final quality of the video. For example, the foregoing equation (3) may be used.

S430: Calculate a distortion factor of the audio according to the reference quality of the audio and final quality of the audio. For example, the foregoing equation (5) may be used.

S440: Calculate a distortion factor of the multimedia sequence according to the distortion factor of the video and the distortion factor of the audio. For example, the foregoing equation (6) or (7) may be used.

S450: Calculate multimedia quality of the multimedia sequence. When audio and video asynchronization does not occur, the multimedia quality of the multimedia sequence is calculated according to the reference quality of the multimedia sequence and the distortion factor of the multimedia sequence, for example, the foregoing equations (8) and (10) may be used; and when the audio and the video are asynchronous, the multimedia quality of the multimedia sequence is calculated according to the reference quality of the multimedia sequence, the distortion factor of the multimedia sequence, and an effect factor of audio and video asynchronization of the multimedia sequence, for example, the foregoing equation (8) and equation (15) or (17) may be used.

Therefore, the method for evaluating multimedia quality according to this embodiment of the present invention, by determining the multimedia quality of the multimedia sequence according to the reference quality of the multimedia sequence and the distortion factor of the multimedia sequence, accords with the subjective feeling of the person, and can accurately and effectively evaluate the multimedia quality.

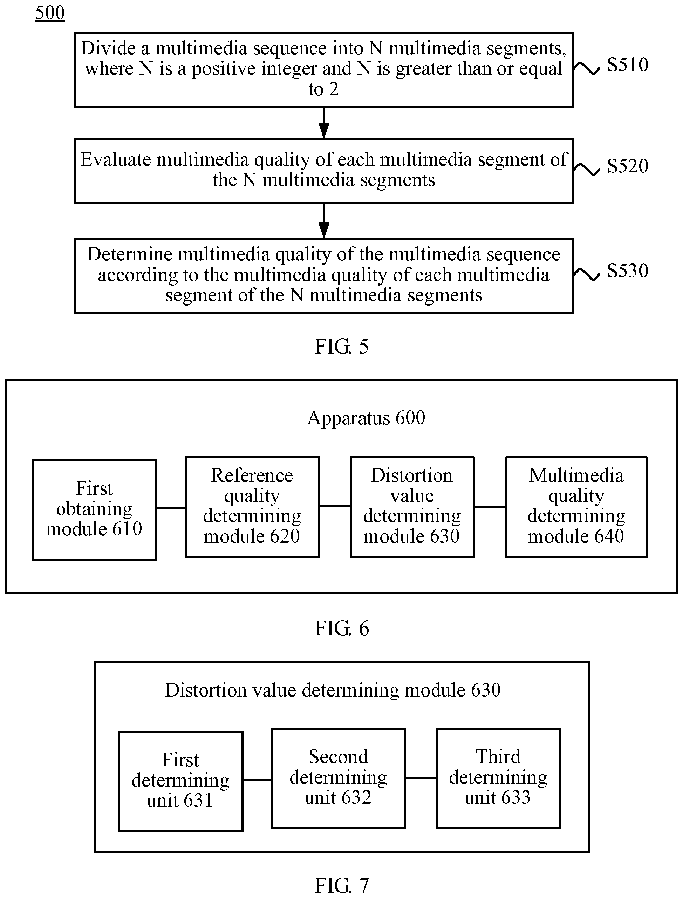

FIG. 5 is a schematic flowchart of a method 500 for evaluating multimedia quality according to an embodiment of the present invention. As shown in FIG. 5, the method 500 includes:

S510: Divide a multimedia sequence into N multimedia segments, where N is a positive integer and N is greater than or equal to 2.

S520: Evaluate multimedia quality of each multimedia segment of the N multimedia segments.

S530: Determine multimedia quality of the multimedia sequence according to the multimedia quality of each multimedia segment of the N multimedia segments.

For one multimedia sequence, due to a short-term memory of a person, the multimedia quality is understood with a deeper memory within a shorter period of time from the present time. In this embodiment of the present invention, the multimedia sequence is first divided into multiple multimedia segments, the multimedia quality of each multimedia segment is then separately evaluated, and then the multimedia quality of the multimedia sequence is determined according to the multimedia quality of each multimedia segment.

Therefore, the method for evaluating multimedia quality according to this embodiment of the present invention, by dividing the multimedia sequence into segments, and determining the multimedia quality of the multimedia sequence according to the multimedia quality of each multimedia segment, is convenient for determining the multimedia quality of the multimedia sequence according to a level of attention that is paid by the person to each multimedia segment, accords with a cognition characteristic of the person, and can increase an accuracy of evaluating the multimedia quality.

In S510, the multimedia sequence is divided into the N multimedia segments. N is a positive integer, and N is greater than or equal to 2, that is, the multimedia sequence is divided into at least two multimedia segments.

Optionally, the multimedia sequence may be divided into N multimedia segments according to a duration. For example, starting from a first frame of the multimedia sequence, the multimedia sequence within each L-second duration is divided into one segment, where a value of L may be adjusted according to a specific situation.

Optionally, the multimedia sequence may also be divided into N multimedia segments according to a level of multimedia quality, video quality, or audio quality. People are prone to pay attention to relatively special content in the multimedia sequence, for example, a video picture affected by a bit error, a sound of a distorted audio, and so on. Therefore, multimedia segmentation takes low-quality multimedia content as a center, and divides the entire multimedia sequence into consecutive multimedia segments with the duration being about L seconds, where the value of L may be adjusted according to the specific situation. For example, the segmentation may be performed according to the following manner:

1. Starting from the first frame, slide a window of 0.8*L seconds, and calculate the multimedia quality within each window.
2. Select a window position with worst quality to determine one multimedia segment.
3. Exclude the selected multimedia segment, repeat steps 1 and 2 to obtain a new multimedia segment, where an interval is controlled to be 0-0.4*L seconds if the new multimedia segment is adjacent to the determined multimedia segment.
4. Repeat step 3 to divide the entire multimedia sequence.
5. Combine a multimedia frame at the interval of the multimedia segments into an adjacent multimedia segment by adopting a manner of equal allocation, to implement complete segmentation of the entire multimedia sequence.

It should be understood that, the foregoing manner of the segmentation performed according to the multimedia quality may also be replaced with segmentation performed according to the video quality or the audio quality. During the segmentation performed according to the video quality, a length unit may be a GOP (Group of Pictures, group of pictures) of the video, that is, one or more GOP lengths are used as one multimedia segment.

It should be further understood that, the manner of performing segmentation on the multimedia sequence may also be another manner; for example, the length of each segment may be different; and for another example, during the segmentation performed according to the multimedia quality, a multimedia segment with high quality may be first selected, and so on. This embodiment of the present invention does not limit a specific manner in which the multimedia sequence is divided into N multimedia segments.

In S520, the multimedia quality of each multimedia segment of the N multimedia segments is evaluated. For each multimedia segment, the multimedia quality of the multimedia segment may be obtained through calculation according to a combination of quality and distortion conditions of the audio and the video of each multimedia segment. The embodiment of the present invention does not limit a manner in which the multimedia quality of each multimedia segment is evaluated. For a specific manner, the prior art may be used, and the foregoing method 100 for evaluating multimedia quality according to the embodiment of the present invention may also be used. Details are not provided herein again.

In S530, the multimedia quality of the multimedia sequence is determined according to the multimedia quality of each multimedia segment of the N multimedia segments. After the multimedia quality of each multimedia segment of the N multimedia segments is evaluated, the multimedia quality of the multimedia sequence is obtained according to multimedia quality of the N multimedia segments.

Optionally, the multimedia quality of the multimedia sequence may be determined by performing weighted averaging on the multimedia quality of the N multimedia segments. Weighted averaging may be performed on the multimedia quality of the N multimedia segments based on an equal weight value, and weighted averaging may also be performed on the multimedia quality of the N multimedia segments based on a weight value related to the multimedia quality of each multimedia segment of the N multimedia segments, for example, lower multimedia quality of a multimedia segment indicates a higher weight. For example, quality of the multimedia sequence may be determined by using the following equation (19):

$$Q = \frac{\sum_{m \in sequence} Q_{av,m} \cdot W_m}{\sum_{m \in sequence} W_m} \tag{19}$$

where, $m$ indicates an $m^{th}$ multimedia segment in the multimedia sequence, $Q_{av,m}$ is multimedia quality of the $m^{th}$ multimedia segment, $W_m$ is its weight value, and may be an equal constant, or a weight that is applied according to a level of the multimedia quality.

Because people are easy to forget things, a multimedia segment that is seen lately is impressive, and a memory about a multimedia segment that is seen early is relatively fuzzy. Therefore, weighted averaging may also be performed on the multimedia quality of the N multimedia segments based on a weight value related to a time of each multimedia segment of the N multimedia segments, for example, a shorter temporal distance between a time of the multimedia segment and a current rating time indicates a larger weight value. For example, quality of the multimedia sequence may be determined by using the following equation (20):

$$Q = \frac{\sum_{m \in sequence} Q_{av,m} \cdot W_{t_m}}{\sum_{m \in sequence} W_{t_m}} \qquad (20)$$

where, $t_m$ is a temporal distance between a time of the $m^{th}$ multimedia segment and the current rating time, and $W_{t_m}$ is a weight value related to this temporal distance.

Weighted averaging may also be performed on the multimedia quality of the N multimedia segments based on a weight value related to the multimedia quality and a time of each multimedia segment of the N multimedia segments. For example, quality of the multimedia sequence may be determined by using the following equation (21):

$$Q = \frac{\sum_{m \in sequence} Q_{av,m} \cdot W_m \cdot W_{t_m}}{\sum_{m \in sequence} W_m \cdot W_{t_m}} \qquad (21)$$

where, $W_m$ is the weight value related to the multimedia quality, $W_{t_m}$ is the weight value related to the temporal distance, and the two weight values may also be combined into one weight value, which is not only related to the multimedia quality, but also related to the temporal distance.

Eyes of a person easily notice a multimedia segment with worse quality, and the worse multimedia segment can reflect quality of the entire multimedia sequence. Therefore, optionally, K multimedia segments with worst multimedia quality may be selected from the N multimedia segments, and the multimedia quality of the multimedia sequence is determined by performing weighted averaging on multimedia quality of the K multimedia segments, where K is a positive integer, and K is greater than or equal to 1 and less than N, and a specific value of K may be set according to an actual application scenario. For a manner in which weighted averaging is performed on the multimedia quality of the K multimedia segments, refer to the foregoing manner in which weighted averaging is performed on the multimedia quality of the N multimedia segments, that is, weighted averaging may be performed on the multimedia quality of the K multimedia segments based on an equal weight value, or based on a weight value related to the multimedia quality and/or a time of each multimedia segment of the K multimedia segments.

Optionally, if weighted averaging is performed based on the equal weight value, the quality of the multimedia sequence may be determined by using the following equation (22):

$$Q = \frac{\sum_{k \in sequence} Q_{av,k}}{K} \qquad (22)$$

where, $k$ indicates a $k^{th}$ multimedia segment with the worst quality in the multimedia sequence, and $Q_{av,k}$ is multimedia quality of the $k^{th}$ multimedia segment with the worst quality in the multimedia sequence.

Optionally, if weighted averaging is performed based on the weight value related to the multimedia quality of each multimedia segment of the K multimedia segments, the quality of the multimedia sequence may be determined by using the following equation (23):

$$Q = \frac{\sum_{k \in sequence} Q_{av,k} \cdot W_k}{\sum_{k \in sequence} W_k} \qquad (23)$$

where, $W_k$ is the weight value related to the multimedia quality.

Optionally, if weighted averaging is performed based on the weight value related to the time of each multimedia segment of the K multimedia segments, the quality of the multimedia sequence may be determined by using the following equation (24):

$$Q = \frac{\sum_{k \in sequence} Q_{av,k} \cdot W_{t_k}}{\sum_{k \in sequence} W_{t_k}} \qquad (24)$$

where, $W_{t_k}$ is the weight value related to the time.

Optionally, if weighted averaging is performed based on the weight value related to the multimedia quality and the time of each multimedia segment of the K multimedia segments, the quality of the multimedia sequence may be determined by using the following equation (25):

$$Q = \frac{\sum_{k \in sequence} Q_{av,k} \cdot W_k \cdot W_{t_k}}{\sum_{k \in sequence} W_k \cdot W_{t_k}} \qquad (25)$$

Therefore, the method for evaluating multimedia quality according to this embodiment of the present invention, by dividing the multimedia sequence into segments, and then determining the multimedia quality of the multimedia sequence according to the multimedia quality of each multimedia segment, is convenient for determining the multimedia quality of the multimedia sequence according to the level of attention that is paid by the person to each multimedia segment, accords with the cognition characteristic of the person, and can increase the accuracy of evaluating the multimedia quality.

It should be understood that, in the embodiments of the present invention, a value of a sequence number of each step does not indicate an execution order, and the execution order of the steps should be determined according to a function and an inherent logic thereof, and should not constitute a limitation on an implementation process of the embodiments of the present invention.

With reference to FIG. 1 to FIG. 5, the foregoing describes in detail the method for evaluating multimedia quality according to the embodiments of the present invention. With reference to FIG. 6 to FIG. 9, the following describes an apparatus for evaluating multimedia quality according to the embodiments of the present invention.

FIG. 6 is a schematic block diagram of an apparatus 600 for evaluating multimedia quality according to an embodiment of the present invention. As shown in FIG. 6, the apparatus 600 includes:

a first obtaining module 610, configured to obtain reference quality of a video and final quality of the video of a multimedia sequence, and reference quality of an audio and final quality of the audio of the multimedia sequence;
a reference quality determining module 620, configured to determine reference quality of the multimedia sequence according to the reference quality of the video and the reference quality of the audio that are obtained by the first obtaining module 610;
a distortion value determining module 630, configured to determine a distortion value of the multimedia sequence according to the reference quality of the video, the final quality of the video, the reference quality of the audio, and the final quality of the audio that are obtained by the first obtaining module 610; and
a multimedia quality determining module 640, configured to determine multimedia quality of the multimedia sequence according to the reference quality of the multimedia sequence that is determined by the reference quality determining module 620 and the distortion value of the multimedia sequence that is determined by the distortion value determining module 630.

The apparatus for evaluating multimedia quality according to this embodiment of the present invention, by determining the multimedia quality of the multimedia sequence according to the reference quality of the multimedia sequence and the distortion value of the multimedia sequence, can directly reflect the distortion of the multimedia sequence, accords with a subjective feeling of a person, and therefore can accurately and effectively evaluate the multimedia quality.

In this embodiment of the present invention, as shown in FIG. 7, optionally, the distortion value determining module 630 includes:

a first determining unit 631, configured to determine a distortion value of the video according to the reference quality of the video and the final quality of the video;
a second determining unit 632, configured to determine a distortion value of the audio according to the reference quality of the audio and the final quality of the audio; and
a third determining unit 633, configured to determine the distortion value of the multimedia sequence according to the distortion value of the video and the distortion value of the audio.

In this embodiment of the present invention, optionally, the third determining unit 633 includes:

a first determining subunit, configured to determine a distortion factor of the video according to the reference quality of the video and the distortion value of the video;
a second determining subunit, configured to determine a distortion factor of the audio according to the reference quality of the audio and the distortion value of the audio;
a third determining subunit, configured to determine a distortion factor of the multimedia sequence according to the distortion factor of the video and the distortion factor of the audio; and
a fourth determining subunit, configured to determine the distortion value of the multimedia sequence according to the reference quality of the multimedia sequence and the distortion factor of the multimedia sequence.

In this embodiment of the present invention, the third determining subunit is further configured to determine a distortion factor $d_{av}$ of the multimedia sequence according to the following equation:

$$d_{av} = \frac{a_5 \cdot d_v + a_6 \cdot d_a}{1 + a_5 \cdot d_v + a_6 \cdot d_a}$$

or

$$d_{av} = a_5 + a_6 \cdot d_v + a_7 \cdot d_a,$$

where, $d_v$ and $d_a$ are respectively the distortion factor of the video and the distortion factor of the audio, and $a_5$, $a_6$, and $a_7$ are constants.

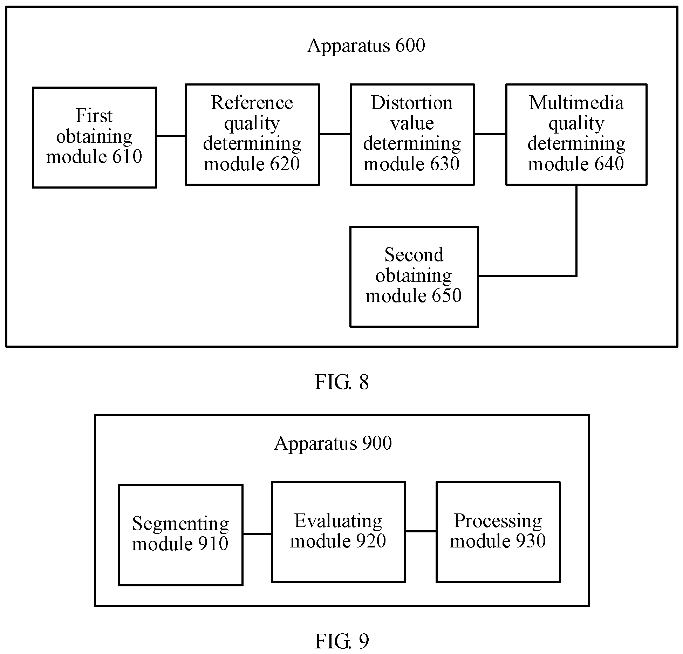

In this embodiment of the present invention, as shown in FIG. 8, the apparatus 600 for evaluating multimedia quality further includes:

a second obtaining module 650, configured to obtain an effect factor of audio and video asynchronization of the multimedia sequence.

The multimedia quality determining module 640 is further configured to determine the multimedia quality of the multimedia sequence according to the reference quality of the multimedia sequence, the distortion value of the multimedia sequence, and the effect factor of audio and video asynchronization of the multimedia sequence that is obtained by the second obtaining module 650.

In this embodiment of the present invention, the multimedia quality determining module 640 is further configured to determine multimedia quality $Q_{av}$ of the multimedia sequence according to the following equation:

$$Q_{av} = Q_{av}{}' - D_{av} \cdot f_5\left(\Delta T_{syn}\right)$$

or

$$Q_{av} = \left( Q_{av}{}' - D_{av} \right) \cdot f_6 \left( \Delta T_{syn} \right),$$

where, $Q_{av}{}'$ is the reference quality of the multimedia sequence, $D_{av}$ is the distortion value of the multimedia sequence, $f_5(\Delta T_{syn})$ and $f_6(\Delta T_{syn})$ are effect factors of audio and video asynchronization of the multimedia sequence, and $\Delta T_{syn}$ is a time difference of audio and video asynchronization of the multimedia sequence; and a larger $|\Delta T_{syn}|$ indicates a larger $f_5(\Delta T_{syn})$ and a smaller $f_6(\Delta T_{syn})$.

The apparatus for evaluating multimedia quality according to this embodiment of the present invention, by determining the multimedia quality of the multimedia sequence according to the reference quality of the multimedia sequence and the distortion value of the multimedia sequence, can directly reflect the distortion of the multimedia sequence, accords with the subjective feeling of the person, and therefore can accurately and effectively evaluate the multimedia quality.

FIG. 9 is a schematic block diagram of an apparatus 900 for evaluating multimedia quality according to an embodiment of the present invention. As shown in FIG. 9, the apparatus 900 includes:

a segmenting module 910, configured to divide a multimedia sequence into N multimedia segments, where N is a positive integer and N is greater than or equal to 2;
an evaluating module 920, configured to evaluate multimedia quality of each multimedia segment of the N multimedia segments; and
a processing module 930, configured to determine multimedia quality of the multimedia sequence according to the multimedia quality of each multimedia segment of the N multimedia segments.

The apparatus for evaluating multimedia quality according to this embodiment of the present invention, by dividing the multimedia sequence into segments, and determining the multimedia quality of the multimedia sequence according to the multimedia quality of each multimedia segment, is convenient for determining the multimedia quality of the multimedia sequence according to a level of attention that is paid by a person to each multimedia segment, accords with a cognition characteristic of the person, and can increase an accuracy of evaluating the multimedia quality.

In this embodiment of the present invention, optionally, the segmenting module 910 includes:

a first segmenting unit, configured to divide the multimedia sequence into the N multimedia segments according to a duration.

In this embodiment of the present invention, optionally, the segmenting module 910 includes:

a second segmenting unit, configured to divide the multimedia sequence into the N multimedia segments according to a level of multimedia quality, video quality, or audio quality.

In this embodiment of the present invention, the evaluating module 920 includes:

a first obtaining unit, configured to obtain reference quality of a video and final quality of the video of each multimedia segment, and reference quality of an audio and final quality of the audio of each multimedia segment;
a reference quality determining unit, configured to determine reference quality of each multimedia segment according to the reference quality of the video and the reference quality of the audio;
a distortion value determining unit, configured to determine a distortion value of each multimedia segment according to the reference quality of the video, the final quality of the video, the reference quality of the audio, and the final quality of the audio; and
an evaluating unit, configured to determine the multimedia quality of each multimedia segment according to the reference quality of each multimedia segment and the distortion value of each multimedia segment.

In this embodiment of the present invention, optionally, the evaluating module 920 further includes:

a second obtaining unit, configured to obtain an effect factor of audio and video asynchronization of each multimedia segment.

The evaluating unit is further configured to determine the multimedia quality of each multimedia segment according to the reference quality of each multimedia segment, the distortion value of each multimedia segment, and the effect factor of audio and video asynchronization of each multimedia segment.

In this embodiment of the present invention, the processing module 930 is further configured to determine the multimedia quality of the multimedia sequence by performing weighted averaging on multimedia quality of N or K multimedia segments, where the K multimedia segments are the K multimedia segments with worst multimedia quality of the N multimedia segments, and K is a positive integer and K is greater than or equal to 1 and less than N.

In this embodiment of the present invention, optionally, the processing module 930 includes:

a first processing unit, configured to determine the multimedia quality of the multimedia sequence based on an equal weight value, and by performing weighted averaging on the multimedia quality of the N or K multimedia segments.

In this embodiment of the present invention, optionally, the processing module 930 includes:

a second processing unit, configured to determine the multimedia quality of the multimedia sequence based on a weight value related to the multimedia quality of each multimedia segment of the N or K multimedia segments, and by performing weighted averaging on the multimedia quality of the N or K multimedia segments.

In this embodiment of the present invention, optionally, the processing module 930 includes:

a third processing unit, configured to determine the multimedia quality of the multimedia sequence based on a weight value related to a time of each multimedia segment of the N or K multimedia segments, and by performing weighted averaging on the multimedia quality of the N or K multimedia segments.

In this embodiment of the present invention, optionally, the processing module 930 includes:

a fourth processing unit, configured to determine the multimedia quality of the multimedia sequence based on a weight value related to the multimedia quality and a time of each multimedia segment of the N or K multimedia segments, and by performing weighted averaging on the multimedia quality of the N or K multimedia segments.

The apparatus for evaluating multimedia quality according to this embodiment of the present invention, by dividing the multimedia sequence into segments, and determining the multimedia quality of the multimedia sequence according to the multimedia quality of each multimedia segment, is convenient for determining the multimedia quality of the multimedia sequence according to the level of attention that is paid by the person to each multimedia segment, accords with the cognition characteristic of the person, and can increase the accuracy of evaluating the multimedia quality.
It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.
A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.
It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.
In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.
The units described as separate parts may or may not be physically separate, and parts displayed as units may or may not be physical units, may be located in one position, or may be distributed on a plurality of network units. A part or all of the units may be selected as required to achieve the objectives of the solutions of the embodiments.
In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions merely relate to specific implementation manners of the present invention, but are not intended to limit the present invention.

**Claims**

1. A method for evaluating multimedia quality, comprising:

    obtaining (S110) reference quality $Q_{v\_coding}$ of a video and final quality $Q_v$ of the video of a multimedia sequence, and reference quality $Q_{a\_coding}$ of an audio and final quality $Q_a$ of the audio of the multimedia sequence, wherein the reference quality of the video is video compression quality that is caused due to the coding compression of the video, the reference quality of the audio is audio compression quality that is caused due to the coding compression of the audio, and the final quality of the video and the final quality of the audio are the obtained final experience quality of the video and the audio of the multimedia sequence, where network damage separately occurs in the video and the audio;
    determining (S120) reference quality $Q'_{av}$ of the multimedia sequence according to the reference quality of the video and the reference quality of the audio;
    determining (S130) a distortion value $D_{av}$ of the multimedia sequence according to the reference quality of the video, the final quality of the video, the reference quality of the audio, and the final quality of the audio; and
    determining (S140) multimedia quality $Q_{av}$ of the multimedia sequence according to the reference quality of the multimedia sequence and the distortion value of the multimedia sequence as

$$Q_{av} = Q'_{av} - D_{av} \ ;$$

    wherein the step of determining (S130) a distortion value of the multimedia sequence according to the reference quality of the video, the final quality of the video, the reference quality of the audio, and the final quality of the audio comprises:

    determining (S131) a distortion value $D_v$ of the video according to the reference quality of the video and the final quality of the video as $D_v = Q_{v\_coding}$ - $Q_v$;
    determining (S132) a distortion value $D_a$ of the audio according to the reference quality of the audio and the final quality of the audio as $D_a = Q_{a\_coding}$ - $Q_a$; and
    determining (S133) the distortion value of the multimedia sequence according to the distortion value of the video and the distortion value of the audio;

    wherein the step of determining (S133) the distortion value of the multimedia sequence according to the distortion value of the video and the distortion value of the audio comprises:

    determining a distortion factor $d_v$ of the video according to the reference quality of the video and the distortion value of the video as $d_v = \frac{Q_{v\_coding} - Q_v}{Q_{v\_coding}}$;
    determining a distortion factor $d_a$ of the audio according to the reference quality of the audio and the distortion value of the audio as $d_a = \frac{Q_{a\_coding} - Q_a}{Q_{a\_coding}}$;
    determining a distortion factor $d_{av}$ of the multimedia sequence according to the distortion factor of the video and the distortion factor of the audio; and

determining the distortion value of the multimedia sequence according to the reference quality of the multimedia sequence and the distortion factor of the multimedia sequence;

wherein the step of determining a distortion factor of the multimedia sequence according to the distortion factor of the video and the distortion factor of the audio comprises:

determining the distortion factor $d_{av}$ of the multimedia sequence according to the following equation:

$$d_{av} = \frac{a_5 \cdot d_v + a_6 \cdot d_a}{1 + a_5 \cdot d_v + a_6 \cdot d_a}$$

or

$$d_{av} = a_5 + a_6 \cdot d_v + a_7 \cdot d_a,$$

wherein $a_5$, $a_6$, and $a_7$ are constants.

2. An apparatus for evaluating multimedia quality, comprising:

a first obtaining module (610), configured to obtain reference quality $Q_{v\_coding}$ of a video and final quality $Q_v$ of the video of a multimedia sequence, and reference quality $Q_{a\_coding}$ of an audio and final quality $Q_a$ of the audio of the multimedia sequence, wherein the reference quality of the video is video compression quality that is caused due to the coding compression of the video, the reference quality of the audio is audio compression quality that is caused due to the coding compression of the audio, and the final quality of the video and the final quality of the audio are the obtained final experience quality of the video and the audio of the multimedia sequence, where network damage separately occurs in the video and the audio;
a reference quality determining module (620), configured to determine reference quality $Q'_{av}$ of the multimedia sequence according to the reference quality of the video and the reference quality of the audio that are obtained by the first obtaining module;
a distortion value determining module (630), configured to determine a distortion value $D_{av}$ of the multimedia sequence according to the reference quality of the video, the final quality of the video, the reference quality of the audio, and the final quality of the audio that are obtained by the first obtaining module; and
a multimedia quality determining module (640), configured to determine multimedia quality $Q_{av}$ of the multimedia sequence according to the reference quality of the multimedia sequence that is determined by the reference quality determining module and the distortion value of the multimedia sequence that is determined by the distortion value determining module, as $Q_{av} = Q'_{av} - D_{av}$;
wherein the distortion value determining module (630) comprises:

a first determining unit (631), configured to determine a distortion value $D_v$ of the video according to the reference quality of the video and the final quality of the video as $D_v = Q_{v\_coding} - Q_v$;
a second determining unit (632), configured to determine a distortion value of the audio according to the reference quality of the audio and the final quality of the audio as $D_a = Q_{a\_coding} - Q_a$; and
a third determining unit (633), configured to determine the distortion value $d_{av}$ of the multimedia sequence according to the distortion value of the video and the distortion value of the audio;

wherein the third determining unit (633) comprises:

a first determining subunit, configured to determine a distortion factor $d_v$ of the video according to the reference quality of the video and the distortion value of the video as $d_v = \frac{Q_{v\_coding} - Q_v}{Q_{v\_coding}}$;

a second determining subunit, configured to determine a distortion factor $d_a$ of the audio according to the reference quality of the audio and the distortion value of the audio as $d_a = \frac{Q_{a\_coding} - Q_a}{Q_{a\_coding}}$;

a third determining subunit, configured to determine a distortion factor $d_{av}$ of the multimedia sequence according to the distortion factor of the video and the distortion factor of the audio; and
a fourth determining subunit, configured to determine the distortion value of the multimedia sequence according to the reference quality of the multimedia sequence and the distortion factor of the multimedia sequence;

wherein the third determining subunit is further configured to determine the distortion factor $d_{av}$ of the multimedia sequence according to the following equation:

$$d_{av} = \frac{a_5 \cdot d_v + a_6 \cdot d_a}{1 + a_5 \cdot d_v + a_6 \cdot d_a}$$

or

$$d_{av} = a_5 + a_6 \cdot d_v + a_7 \cdot d_a,$$

wherein $a_5$, $a_6$, and $a_7$ are constants.

**Patentansprüche**

1.  Verfahren zum Bewerten von Multimediaqualität, das die folgenden Schritte umfasst:

Erhalten (S110) einer Referenzqualität $Q_{v\_coding}$ eines Videos und einer Endqualität $Q_v$ des Videos einer Multimediasequenz und einer Referenzqualität $Q_{a\_coding}$ eines Audios und einer Endqualität $Q_a$ des Audios der Multimediasequenz, wobei die Referenzqualität des Videos Videokomprimierungsqualität ist, die aufgrund der Codierkomprimierung des Videos verursacht wird, die Referenzqualität des Audios Audiokomprimierungsqualität ist, die aufgrund der Codierkomprimierung des Audios verursacht wird, und die Endqualität des Videos und die Endqualität des Audios die erhaltene Enderlebnisqualität des Videos und des Audios der Multimediasequenz ist, wo Netzwerkbeschädigung im Video und im Audio getrennt auftritt;
Bestimmen (S120) der Referenzqualität $Q'_{av}$ der Multimediasequenz gemäß der Referenzqualität des Videos und der Referenzqualität des Audios;
Bestimmen (130) eines Verzerrungswerts $D_{av}$ der Multimediasequenz gemäß der Referenzqualität des Videos, der Endqualität des Videos, der Referenzqualität des Audios und der Endqualität des Audios; und
Bestimmen (S140) einer Multimediaqualität $Q_{av}$ der Multimediasequenz gemäß der Referenzqualität der Multimediasequenz und dem Verzerrungswert der Multimediasequenz als $Q_{av} = Q'_{av} - D_{av}$;
wobei der Schritt des Bestimmens (130) eines Verzerrungswerts der Multimediasequenz gemäß der Referenzqualität des Videos, der Endqualität des Videos, der Referenzqualität des Audios und der Endqualität des Audios die folgenden Schritte umfasst:

Bestimmen (S131) eines Verzerrungswerts $D_v$ des Videos gemäß der Referenzqualität des Videos und der Endqualität des Videos als $D_v = Q_{v\_coding} - Q_v$;
Bestimmen (S132) eines Verzerrungswerts $D_a$ des Audios gemäß der Referenzqualität des Audios und der Endqualität des Audios als $D_a = Q_{a\_coding} - Q_a$; und
Bestimmen (S133) des Verzerrungswerts der Multimediasequenz gemäß dem Verzerrungswert des Videos und dem Verzerrungswert des Audios;

wobei der Schritt des Bestimmens (S133) des Verzerrungswerts der Multimediasequenz gemäß dem Verzerrungswert des Videos und dem Verzerrungswert des Audios die folgenden Schritte umfasst:

Bestimmen eines Verzerrungsfaktors $d_v$ des Videos gemäß der Referenzqualität des Videos und des Verzerrungswerts des Videos als $d_v = \frac{Q_{v\_coding} - Q_v}{Q_{v\_coding}}$;

Bestimmen eines Verzerrungsfaktors $d_a$ des Audios gemäß der Referenzqualität des Audios und des Verzerrungswerts des Audios als $d_a = \frac{Q_{a\_coding} - Q_a}{Q_{a\_coding}}$;

Bestimmen eines Verzerrungsfaktors $d_{av}$ der Multimediasequenz gemäß dem Verzerrungsfaktor des Videos und dem Verzerrungsfaktor des Audios; und

Bestimmen des Verzerrungswerts der Multimediasequenz gemäß der Referenzqualität der Multimediasequenz und dem Verzerrungsfaktor der Multimediasequenz;

wobei der Schritt des Bestimmens eines Verzerrungsfaktors der Multimediasequenz gemäß dem Verzerrungsfaktor des Videos und dem Verzerrungsfaktor des Audios den folgenden Schritt umfasst:

Bestimmen des Verzerrungsfaktors $d_{av}$ der Multimediasequenz gemäß der folgenden Gleichung:

$$d_{av} = \frac{a_5 \cdot d_v + a_6 \cdot d_a}{1 + a_5 \cdot d_v + a_6 \cdot d_a}$$

oder

$$d_{av} = a_5 + a_6 \cdot d_v + a_7 \cdot d_a,$$

wobei $a_5$, $a_6$ und $a_7$ Konstanten sind.

2. Vorrichtung zum Bewerten von Multimediaqualität, die Folgendes umfasst:

ein erstes Erhaltemodul (610), das ausgelegt ist zum Erhalten einer Referenzqualität $Q_{v\_coding}$ eines Videos und einer Endqualität $Q_v$ des Videos einer Multimediasequenz und einer Referenzqualität $Q_{a\_coding}$ eines Audios und einer Endqualität $Q_a$ eines Audios der Multimediasequenz, wobei die Referenzqualität des Videos Videokomprimierungsqualität ist, die aufgrund der Codierkomprimierung des Videos verursacht wird, die Referenzqualität des Audios Audiokomprimierungsqualität ist, die aufgrund der Codierkomprimierung des Audios verursacht wird, und die Endqualität des Videos und die Endqualität des Audios die erhaltene Enderlebnisqualität des Videos und des Audios der Multimediasequenz sind, wo Netzwerkbeschädigung im Video und im Audio getrennt auftritt;

ein Referenzqualitätsbestimmungsmodul (620), das ausgelegt ist zum Bestimmen der Referenzqualität $Q'_{av}$ der Multimediasequenz gemäß der Referenzqualität des Videos und der Referenzqualität des Audios, die von dem ersten Erhaltemodul erhalten wurden;

ein Verzerrungswertbestimmungsmodul (630), das ausgelegt ist zum Bestimmen eines Verzerrungswerts $D_{av}$ der Multimediasequenz gemäß der Referenzqualität des Videos, der Endqualität des Videos, der Referenzqualität des Audios und der Endqualität des Audios, die von dem ersten Erhaltemodul erhalten wurden; und

ein Multimediaqualitätsbestimmungsmodul (640), das ausgelegt ist zum Bestimmen einer Multimediaqualität $Q_{av}$ der Multimediasequenz gemäß der Referenzqualität der Multimediasequenz, die von dem Referenzqualitätsbestimmungsmodul bestimmt wird, und dem Verzerrungswert der Multimediasequenz, die von dem Verzerrungswertbestimmungsmodul bestimmt wird, als $Q_{av} = Q'_{av} - D_{av}$;

wobei das Verzerrungswertbestimmungsmodul (630) Folgendes umfasst:

eine erste Bestimmungseinheit (631), die ausgelegt ist zum Bestimmen eines Verzerrungswerts $D_v$ des Videos gemäß der Referenzqualität des Videos und der Endqualität des Videos als $D_v = Q_{v\_coding} - Q_v$;

eine zweite Bestimmungseinheit (632), die ausgelegt ist zum Bestimmen eines Verzerrungswerts des Audios gemäß der Referenzqualität des Audios und der Endqualität des Audios als $D_a = Q_{a\_coding} - Q_a$; und

eine dritte Bestimmungseinheit (633), die ausgelegt ist zum Bestimmen des Verzerrungswerts $d_{av}$ der Multimediasequenz gemäß dem Verzerrungswert des Videos und dem Verzerrungswert des Audios;

wobei die dritte Bestimmungseinheit (633) Folgendes umfasst:

eine erste Bestimmungsuntereinheit, die ausgelegt ist zum Bestimmen eines Verzerrungsfaktors $d_v$ des Videos gemäß der Referenzqualität des Videos und des Verzerrungswerts des Videos als $d_v = \frac{Q_{v\_coding} - Q_v}{Q_{v\_coding}}$;

eine zweite Bestimmungsuntereinheit, die ausgelegt ist zum Bestimmen eines Verzerrungsfaktors $d_a$ des Audios gemäß der Referenzqualität des Audios und des Verzerrungswerts des Audios als

$$d_a = \frac{Q_{a\_coding} - Q_a}{Q_{a\_coding}};$$

eine dritte Bestimmungsuntereinheit, die ausgelegt ist zum Bestimmen eines Verzerrungsfaktors $d_{av}$ der Multimediasequenz gemäß dem Verzerrungsfaktor des Videos und dem Verzerrungsfaktor des Audios; und eine vierte Bestimmungsuntereinheit, die ausgelegt ist zum Bestimmen des Verzerrungswerts der Multimediasequenz gemäß der Referenzqualität der Multimediasequenz und dem Verzerrungsfaktor der Multimediasequenz;

wobei die dritte Bestimmungsuntereinheit ferner ausgelegt ist zum Bestimmen des Verzerrungsfaktors $d_{av}$ der Multimediasequenz gemäß der folgenden Gleichung:

$$d_{av} = \frac{a_5 \cdot d_v + a_6 \cdot d_a}{1 + a_5 \cdot d_v + a_6 \cdot d_a}$$

oder

$$d_{av} = a_5 + a_6 \cdot d_v + a_7 \cdot d_a,$$

wobei $a_5$, $a_6$ und $a_7$ Konstanten sind.

## Revendications

1.  Procédé d'évaluation d'une qualité multimédia, comprenant les étapes suivantes :

    obtenir (S110) une qualité de référence $Q_{v\_coding}$ d'une piste vidéo et une qualité finale $Q_v$ de la piste vidéo d'une séquence multimédia, et une qualité de référence $Q_{a\_coding}$ d'une piste audio et une qualité finale $Q_a$ de la piste audio de la séquence multimédia, la qualité de référence de la piste vidéo étant une qualité de compression vidéo qui est obtenue en raison de la compression du codage de la piste vidéo, la qualité de référence de la piste audio étant une qualité de compression audio qui est obtenue en raison de la compression du codage de la piste audio, et la qualité finale de la piste vidéo et la qualité finale de la piste audio étant la qualité d'expérience finale obtenue de la piste vidéo et de la piste audio de la séquence multimédia, un endommagement réseau se produisant séparément dans la piste vidéo et la piste audio ;
    déterminer (S 120) une qualité de référence $Q'_{av}$ de la séquence multimédia en fonction de la qualité de référence de la piste vidéo et de la qualité de référence de la piste audio ;
    déterminer (S130) une valeur de distorsion $D_{av}$ de la séquence multimédia en fonction de la qualité de référence de la piste vidéo, de la qualité finale de la piste vidéo, de la qualité de référence de la piste audio et de la qualité finale de la piste audio ; et
    déterminer (S 140) une qualité multimédia $Q_{av}$ de la séquence multimédia en fonction de la qualité de référence de la séquence multimédia et de la valeur de distorsion de la séquence multimédia comme $Q_{av} = Q'_{av} - D_{av}$ ;
    dans lequel l'étape consistant à déterminer (S130) une valeur de distorsion de la séquence multimédia en fonction de la qualité de référence de la piste vidéo, de la qualité finale de la piste vidéo, de la qualité de référence de la piste audio et de la qualité finale de la piste audio comprend les étapes suivantes :

    déterminer (S131) une valeur de distorsion $D_v$ de la piste vidéo en fonction de la qualité de référence de la piste vidéo et de la qualité finale de la piste vidéo comme

    $$D_v = Q_{v\_coding} - Q_v \ ;$$

    déterminer (S 132) une valeur de distorsion $D_a$ de la piste audio en fonction de la qualité de référence de la piste audio et de la qualité finale de la piste audio comme

$$D_a = Q_{a\_coding} - Q_a \; ;$$

et

déterminer (S133) la valeur de distorsion de la séquence multimédia en fonction de la valeur de distorsion de la piste vidéo et de la valeur de distorsion de la piste audio ;

dans lequel l'étape consistant à déterminer (S133) la valeur de distorsion de la séquence multimédia en fonction de la valeur de distorsion de la piste vidéo et de la valeur de distorsion de la piste audio comprend les étapes suivantes :

déterminer un facteur de distorsion $d_v$ de la piste vidéo en fonction de la qualité de référence de la piste vidéo et de la valeur de distorsion de la piste vidéo comme

$$d_v = \frac{Q_{v\_coding} - Q_v}{Q_{v\_coding}} \; ;$$

déterminer un facteur de distorsion $d_a$ de la piste audio en fonction de la qualité de référence de la piste audio et de la valeur de distorsion de la piste audio comme

$$d_a = \frac{Q_{a\_coding} - Q_a}{Q_{a\_coding}} \; ;$$

déterminer un facteur de distorsion $d_{av}$ de la séquence multimédia en fonction du facteur de distorsion de la piste vidéo et du facteur de distorsion de la piste audio ; et
déterminer la valeur de distorsion de la séquence multimédia en fonction de la qualité de référence de la séquence multimédia et du facteur de distorsion de la séquence multimédia ;

dans lequel l'étape consistant à déterminer un facteur de distorsion de la séquence multimédia en fonction du facteur de distorsion de la piste vidéo et du facteur de distorsion de la piste audio comprend l'étape suivante :

déterminer le facteur de distorsion $d_{av}$ de la séquence multimédia selon l'équation suivante :

$$d_{av} = \frac{a_5 \cdot d_v + a_6 \cdot d_a}{1 + a_5 \cdot d_v + a_6 \cdot d_a}$$

ou

$$d_{av} = a_5 + a_6 \cdot d_v + a_7 \cdot d_a,$$

dans lesquelles $a_5$, $a_6$ et $a_7$ sont des constantes.

2.  Appareil d'évaluation d'une qualité multimédia, comprenant :

un premier module d'obtention (610), configuré pour obtenir une qualité de référence $Q_{v\_coding}$ d'une piste vidéo et une qualité finale $Q_v$ de la piste vidéo d'une séquence multimédia, et une qualité de référence $Q_{a\_coding}$ d'une piste audio et une qualité finale $Q_a$ de la piste audio de la séquence multimédia, la qualité de référence de la piste vidéo étant une qualité de compression vidéo qui est obtenue en raison de la compression du codage de la piste vidéo, la qualité de référence de la piste audio étant une qualité de compression audio qui est obtenue en raison de la compression du codage de la piste audio, et la qualité finale de la piste vidéo et la qualité finale de la piste audio étant la qualité d'expérience finale obtenue de la piste vidéo et de la piste audio de la séquence multimédia, un endommagement réseau se produisant séparément dans la piste vidéo et la piste audio ;
un module de détermination de qualité de référence (620), configuré pour déterminer une qualité de référence

$Q'_{av}$ de la séquence multimédia en fonction de la qualité de référence de la piste vidéo et de la qualité de référence de la piste audio qui sont obtenues par le premier module d'obtention ;

un module de détermination de valeur de distorsion (630), configuré pour déterminer une valeur de distorsion $D_{av}$ de la séquence multimédia en fonction de la qualité de référence de la piste vidéo, de la qualité finale de la piste vidéo, de la qualité de référence de la piste audio et de la qualité finale de la piste audio qui sont obtenues par le premier module d'obtention ; et

un module de détermination de qualité multimédia (640), configuré pour déterminer une qualité multimédia $Q_{av}$ de la séquence multimédia en fonction de la qualité de référence de la séquence multimédia qui est déterminée par le module de détermination de qualité de référence et de la valeur de distorsion de la séquence multimédia qui est déterminée par le module de détermination de valeur de distorsion comme $Q_{av} = Q'_{av} - D_{av}$ ;

dans lequel le module de détermination de valeur de distorsion (630) comprend :

une première unité de détermination (631), configurée pour déterminer une valeur de distorsion $D_v$ de la piste vidéo en fonction de la qualité de référence de la piste vidéo et de la qualité finale de la piste vidéo comme $D_v = Q_{v\_coding} - Q_v$ ;

une deuxième unité de détermination (632), configurée pour déterminer une valeur de distorsion de la piste audio en fonction de la qualité de référence de la piste audio et de la qualité finale de la piste audio comme $D_a = Q_{a\_coding} - Q_a$ ; et

une troisième unité de détermination (633), configurée pour déterminer la valeur de distorsion $d_{av}$ de la séquence multimédia en fonction de la valeur de distorsion de la piste vidéo et de la valeur de distorsion de la piste audio ;

dans lequel la troisième unité de détermination (633) comprend :

une première sous-unité de détermination, configurée pour déterminer un facteur de distorsion $d_v$ de la piste vidéo en fonction de la qualité de référence de la piste vidéo et de la valeur de distorsion de la piste vidéo comme $d_v = \frac{Q_{v\_coding} - Q_v}{Q_{v\_coding}}$ ;

une deuxième sous-unité de détermination, configurée pour déterminer un facteur de distorsion $d_a$ de la piste audio en fonction de la qualité de référence de la piste audio et de la valeur de distorsion de la piste audio comme $d_a = \frac{Q_{a\_coding} - Q_a}{Q_{a\_coding}}$ ;

une troisième sous-unité de détermination, configurée pour déterminer un facteur de distorsion $d_{av}$ de la séquence multimédia en fonction du facteur de distorsion de la piste vidéo et du facteur de distorsion de la piste audio ; et

une quatrième sous-unité de détermination, configurée pour déterminer la valeur de distorsion de la séquence multimédia en fonction de la qualité de référence de la séquence multimédia et du facteur de distorsion de la séquence multimédia ;

dans lequel la troisième sous-unité de détermination est également configurée pour déterminer le facteur de distorsion $d_{av}$ de la séquence multimédia selon l'équation suivante :

$$d_{av} = \frac{a_5 \cdot d_v + a_6 \cdot d_a}{1 + a_5 \cdot d_v + a_6 \cdot d_a}$$

ou

$$d_{av} = a_5 + a_6 \cdot d_v + a_7 \cdot d_a,$$

dans lesquelles $a_5$, $a_6$ et $a_7$ sont des constantes.

100

| Obtain reference quality of a video and final quality of the video of a multimedia sequence, and reference quality of an audio and final quality of the audio of the multimedia sequence | S110 |

↓

| Determine reference quality of the multimedia sequence according to the reference quality of the video and the reference quality of the audio | S120 |

↓

| Determine a distortion value of the multimedia sequence according to the reference quality of the video, the final quality of the video, the reference quality of the audio, and the final quality of the audio | S130 |

↓

| Determine multimedia quality of the multimedia sequence according to the reference quality of the multimedia sequence and the distortion value of the multimedia sequence | S140 |

FIG. 1

100

| Determine a distortion value of a video according to reference quality of the video and final quality of the video | S131 |

↓

| Determine a distortion value of an audio according to reference quality of the audio and final quality of the audio | S132 |

↓

| Determine a distortion value of a multimedia sequence according to the distortion value of the video and the distortion value of the audio | S133 |

FIG. 2

100

| Obtain reference quality of a video and final quality of the video of a multimedia sequence, and reference quality of an audio and final quality of the audio of the multimedia sequence | S110 |

↓

| Obtain an effect factor of audio and video asynchronization of the multimedia sequence | S150 |

↓

| Determine reference quality of the multimedia sequence according to the reference quality of the video and the reference quality of the audio | S120 |

↓

| Determine a distortion value of the multimedia sequence according to the reference quality of the video, the final quality of the video, the reference quality of the audio, and the final quality of the audio | S130 |

↓

| Determine multimedia quality of the multimedia sequence according to the reference quality of the multimedia sequence, the distortion value of the multimedia sequence, and the effect factor of audio and video asynchronization of the multimedia sequence | S141 |

FIG. 3

FIG. 4

500

| Divide a multimedia sequence into N multimedia segments, where N is a positive integer and N is greater than or equal to 2 | S510 |

↓

| Evaluate multimedia quality of each multimedia segment of the N multimedia segments | S520 |

↓

| Determine multimedia quality of the multimedia sequence according to the multimedia quality of each multimedia segment of the N multimedia segments | S530 |

FIG. 5

Apparatus 600

| First obtaining module 610 | — | Reference quality determining module 620 | — | Distortion value determining module 630 | — | Multimedia quality determining module 640 |

FIG. 6

Distortion value determining module 630

| First determining unit 631 | — | Second determining unit 632 | — | Third determining unit 633 |

FIG. 7

Apparatus 600

| First obtaining module 610 | Reference quality determining module 620 | Distortion value determining module 630 | Multimedia quality determining module 640 |

Second obtaining module 650

FIG. 8

Apparatus 900

| Segmenting module 910 | Evaluating module 920 | Processing module 930 |

FIG. 9

**EP 2 819 329 B1**

**REFERENCES CITED IN THE DESCRIPTION**

**Patent documents cited in the description**

- EP 2106153 A1
- US 20090153668 A1

- EP 2439953 A1